# EUROPÄISCHE PATENTSCHRIFT

(11) **EP 1 576 274 B1**
(45) Veröffentlichungstag und Bekanntmachung des Hinweises auf die Patenterteilung: **01.08.2007**
(21) Anmeldenummer: 03813480.5
(22) Anmeldetag: 02.07.2003
(51) Int. Cl.: F02M 1/00

(54) **BRENNSTOFFEINSPRITZVENTIL**
FUEL INJECTION VALVE
SOUPAPE D'INJECTION DE CARBURANT

(30) Priorität: 19.12.2002 DE 10259799
(43) Veröffentlichungstag der Anmeldung: 21.09.2005
(73) Patentinhaber: ROBERT BOSCH GMBH, 70442 Stuttgart (DE)
(72) Erfinder: REITER, Ferdinand, 71706 Markgroeningen (DE); MAIER, Martin, 71696 Moeglingen (DE)
(74) Vertreter: Körfer, Thomas
(86) Internationale Anmeldenummer: PCT/DE2003/002204
(87) Internationale Veröffentlichungsnummer: WO 2004/057178

(56) Entgegenhaltungen:
- EP-A- 1 063 416
- WO-A-03/023219
- WO-A-03/038272
- WO-A-03/038273
- DE-A- 3 918 887
- DE-A- 19 534 445
- GB-A- 610 873

## Beschreibung

### Stand der Technik

Die Erfindung geht aus von einem Brennstoffeinspritzventil nach der Gattung des Hauptanspruchs.

Beispielsweise ist aus der DE 195 34 445 A1 ein nach außen öffnendes Brennstoffeinspritzventil bekannt, welches einen kegeligen Dichtsitz aufweist. Die Ventilnadel weist eine Zentralbohrung auf, welche in eine dem Dichtsitz vorgelagerte Druckkammer mündet. Ein Aktor, der als piezoelektrischer Aktor ausgeführt ist, stützt sich einerseits gegen einen Düsenkörper und andererseits gegen eine mit der Ventilnadel kraftschlüssig verbundene Druckschulter ab. Eine Rückstellfeder hält die Ventilnadel in einer Schließstellung. Bei Erregung des Aktors wird durch Längenausdehnung desselben die Ventilnadel gegen die schließende Kraft der Rückstellfeder geöffnet und Brennstoff abgespritzt.

Nachteilig bei dem aus der DE 195 34 445 A1 bekannten Stand der Technik ist insbesondere, daß die Durchflußmenge bei nach außen öffnenden Brennstoffeinspritzventilen großen Streuungen unterliegt. Weiterhin ist das Strahlbild bedingt durch Fertigungstoleranzen im Bereich des Dichtsitzes oft beeinträchtigt.

### Vorteile der Erfindung

Das erfindungsgemäße Brennstoffeinspritzventil mit den kennzeichnenden Merkmalen des Hauptanspruchs hat demgegenüber den Vorteil, daß bedingt durch eine zumindest im abströmseitigen Teil hohle Ventilnadel, welche stirnseitig gegen den Brennraum abgeschlossen ist, eine hohe Strahlqualität bei beliebig vorgebbarer Strahlform und großer Durchflußgenauigkeit erzielt werden kann. Zumeßbohrungen sind abströmseitig des Führungsbereichs in der Ventilnadel angeordnet.

Durch die in den Unteransprüchen aufgeführten Maßnahmen sind vorteilhafte Weiterentwicklungen des im Hauptanspruch angegebenen Brennstoffeinspritzventils möglich.

Vorteilhafterweise weist die Ventilnadel im Düsenkörper einen Führungsbereich auf, der etwa die gleiche Ausdehnung wie die Ausnehmung der Ventilnadel aufweist. Zuströmöffnungen sind zuströmseitig des Führungsbereichs in der Ventilnadel angeordnet.

Vorteilhafterweise sind die Zuströmöffnungen großvolumiger als die Zumeßbohrungen, um Drosseleffekte zu vermeiden.

Von Vorteil ist außerdem, daß die Ausnehmung in der Ventilnadel in einfacher Weise mittels Bohren herstellbar ist oder die Ventilnadel auch auf ihrer gesamten Länge hohl ausgebildet sein kann.

Auch eine hohle, rohrförmige Verlängerung eines Ventilnadelschaftes ist von Vorteil, da die Herstellung, die Verbindung und die Einbringung der Bohrungen einfach und kostengünstig erfolgen kann.

Ein Verschlußkörper zum stirnseitigen Verschluß der Ventilnadel kann vorteilhafterweise auf vielfältige Art, beispielsweise gedreht oder tiefgezogen, hergestellt oder auch einstückig mit dem Rohr ausgebildet sein.

### Zeichnung

Ausführungsbeispiele der Erfindung sind in der Zeichnung vereinfacht dargestellt und in der nachfolgenden Beschreibung näher erläutert. Es zeigen:
- Fig. 1A: einen schematischen Schnitt durch ein erstes Ausführungsbeispiel eines erfindungsgemäß ausgestalteten Brennstoffeinspritzventils in einer Gesamtdarstellung;
- Fig. 1B: einen schematischen Ausschnitt aus dem in Fig. 1A dargestellten ersten Ausführungsbeispiel eines erfindungsgemäßen Brennstoffeinspritzventils im Bereich IB in Fig. 1A;
- Fig. 2: einen schematischen Schnitt durch ein zweites Ausführungsbeispiel eines erfindungsgemäß ausgestalteten Brennstoffeinspritzventils in gleicher Darstellung wie Fig. 1B;
- Fig. 3: einen schematischen Schnitt durch ein drittes Ausführungsbeispiel eines erfindungsgemäß ausgestalteten Brennstoffeinspritzventils in gleicher Darstellung wie Fig. 1B;
- Fig. 4: einen schematischen Schnitt durch ein viertes Ausführungsbeispiel eines erfindungsgemäß ausgestalteten Brennstoffeinspritzventils in gleicher Darstellung wie Fig. 1B;
- Fig. 5: einen schematischen Schnitt durch ein fünftes Ausführungsbeispiel eines erfindungsgemäß ausgestalteten Brennstoffeinspritzventils in gleicher Darstellung wie Fig. 1B; und
- Fig. 6: einen schematischen Schnitt durch ein sechstes Ausführungsbeispiel eines erfindungsgemäß ausgestalteten Brennstoffeinspritzventils in gleicher Darstellung wie Fig. 1B.

### Beschreibung der Ausführungsbeispiele

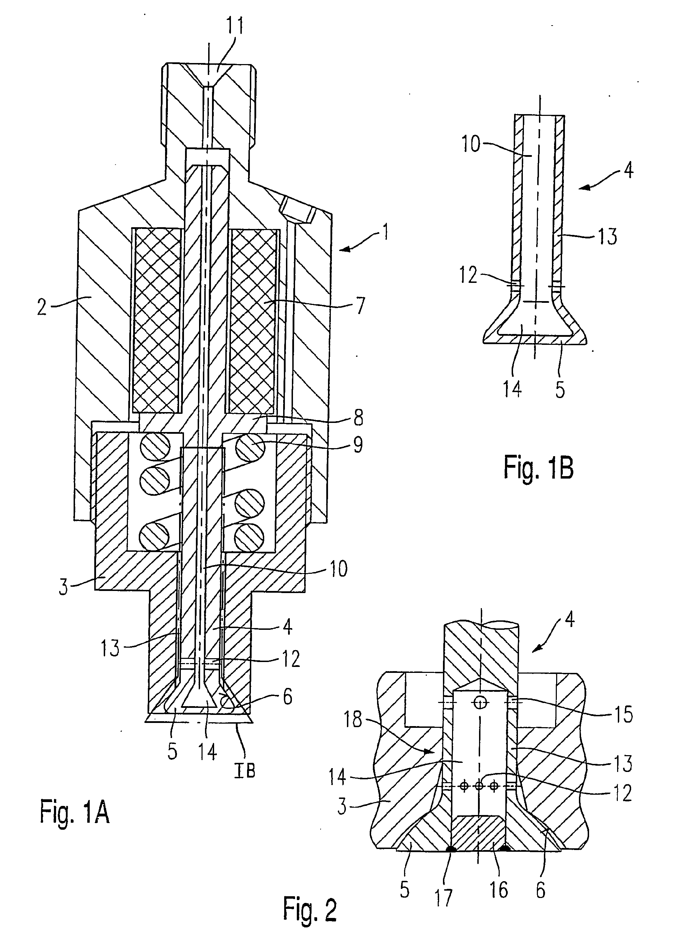

Ein in Fig. 1A in einer Gesamtansicht dargestelltes erstes Ausführungsbeispiel eines erfindungsgemäßen Brennstoffeinspritzventils 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 besteht aus einem Gehäusekörper 2 und einem Düsenkörper 3, in welchem eine Ventilnadel 4 angeordnet ist. Die Ventilnadel 4 steht mit einem Ventilschließkörper 5 in Wirkverbindung, der mit einer Ventilsitzfläche 6 zu einem Dichtsitz zusammenwirkt. Bei dem Brennstoffeinspritzventil 1 handelt es sich im Ausführungsbeispiel um ein nach außen öffnendes Brennstoffeinspritzventil 1. Das Brennstoffeinspritzventil 1 weist einen Aktor 7 auf, der im Ausführungsbeispiel als piezoelektrischer Aktor 7 ausgeführt ist. Der Aktor stützt sich einerseits am Gehäusekörper 2 und andererseits an einer mit der Ventilnadel 4 in Wirkverbindung stehenden Schulter 8 ab. Abströmseitig der Schulter 8 ist eine Rückstellfeder 9 angeordnet, welche sich ihrerseits an dem Düsenkörper 3 abstützt.

Im Ruhezustand des Brennstoffeinspritzventils 1 wird die Schulter 8 durch die Kraft der Rückstellfeder 9 entgegen der Hubrichtung so beaufschlagt, daß der Ventilschließkörper 5 an der Ventilsitzfläche 6 in dichtender Anlage gehalten wird. Bei Erregung des piezoelektrischen Aktors 7 dehnt sich dieser in axialer Richtung entgegen der Federkraft der Rückstellfeder 9 aus, so daß die Schulter 8 mit der Ventilnadel 4, welche mit der Schulter 8 kraftschlüssig verbunden ist, in Hubrichtung bewegt wird. Der Ventilschließkörper 5 hebt von der Ventilsitzfläche 6 ab, und der über einen zentralen Brennstoffkanal 10 und Zumeßbohrungen 12 in der Ventilnadel 4 zugeführte Brennstoff wird abgespritzt.

Wird der piezoelektrische Aktor 7 entladen, reduziert sich seine axiale Ausdehnung, wodurch die Ventilnadel 4 durch den Druck der Rückstellfeder 9 entgegen der Hubrichtung bewegt wird. Der Ventilschließkörper 5 setzt auf der Ventilsitzfläche 6 auf und das Brennstoffeinspritzventil 1 wird geschlossen.

Die Ventilnadel 4 ist erfindungsgemäß zumindest in einem abströmseitigen Ende hohl ausgebildet und weist neben dem zentralen Brennstoffkanal 10 Zumeßbohrungen 12 in einer Wandung 13 der Ventilnadel 4 auf, durch welche der durch eine zulaufseitige zentrale Brennstoffzufuhr 11 zugeleitete Brennstoff zum Dichtsitz geführt wird. Ein Hohlraum 14 im Ventilschließkörper 5 ist stirnseitig gegen den Brennraum der Brennkraftmaschine abgeschlossen. Die Ventilnadel 4 mit dem Ventilschließkörper 5 ist in Fig. 1B vergrößert dargestellt und in der zugehörigen Beschreibung näher erläutert.

Vorteile der Brennstoffzufuhr durch eine zumindest teilweise hohle Ventilnadel 4 und durch Zumeßbohrungen 12 zum Dichtsitz sind die exaktere Nadelführung, welche bei herkömmlichen Ventilnadeln bedingt durch Flächenanschliffe, welche zur Zuleitung des Brennstoffs zum Dichtsitz benötigt werden, ungenau ist, eine Verbesserung der Strahlqualität, insbesondere eine Reduzierung der Strähnigkeit sowie die Möglichkeit, das Strahlbild gezielt durch die Form und Anordnung der Zumeßbohrungen 12 zu formen und die Durchflußgenauigkeit bedingt durch die einfache Reproduzierbarkeit der Durchmesser der Zumeßbohrungen 12 zu steigern.

Fig. 1B zeigt in einer ausschnittsweisen Schnittdarstellung das abströmseitige Ende der Ventilnadel 4 des in Fig. 1A dargestellten Brennstoffeinspritzventils 1. Wie bereits in der Beschreibung zu Fig. 1A erwähnt, ist die Ventilnadel 4 hohl ausgebildet. Der Ventilschließkörper 5 ist einstückig mit der Ventilnadel 4 ausgebildet. Eine solche Ventilnadel 4 ist beispielsweise mittels Hydro-Umformung in besonders einfacher Weise herstellbar.

Die Zumeßbohrungen 12 können dabei symmetrisch über den Umfang der Ventilnadel 4 angeordnet oder auch gezielt asymmetrisch verteilt sein, um ein gewünschtes Strahlbild zu erzielen. So können beispielsweise gezielt Bereiche ausgeblendet werden, um z. B. die Zündkerze nicht direkt anzuspritzen. Die Form der Zumeßbohrungen 12 ist dabei ebenfalls beliebig. Denkbar sind Langlöcher, elliptische oder ungleichmäßig geformte Querschnitte, um beliebigen Anforderungen an das Strahlbild genügen zu können. Die Zumeßbohrungen 12 können durch Bohren, Erodieren, elektrochemische Bearbeitung oder Laserbohren in die Wandung 13 der Ventilnadel 4 eingebracht werden. Bei vielen Zumeßöffnungen 12 können alle Zumeßöffnungen 12 bis auf eine ohne große Anforderungen an die Genauigkeit angebracht werden. Nach einer Durchflußmessung kann die letzte Zumeßöffnung 12 dann mit einem einen Solldurchfluß erlaubenden Durchmesser eingebracht werden.

Fig. 2 zeigt im gleichen Ausschnitt wie Fig. 1B ein zweites Ausführungsbeispiel einer erfindungsgemäß ausgestalteten Ventilnadel 4.

Die Ventilnadel 4 ist in ihrem abströmseitigen Ende hohlgebohrt. Zuströmöffnungen 15 sind zulaufseitig eines Führungsbereichs 18 in die Wandung 13 der Ventilnadel 4 eingebracht und sorgen für die Zuleitung des Brennstoffs in den Hohlraum 14. Die Zuströmöffnungen 15 sind dabei größer als die Zumeßbohrungen 12 abströmseitig des Führungsbereichs 18. Auch die Form der Zuströmöffnungen 15 ist, wie diejenige der Zumeßbohrungen 12, beliebig und kann an die jeweiligen Anforderungen gezielt angepaßt werden. Die Herstellung kann analog zu derjenigen der Zumeßbohrungen 12 erfolgen.

Stirnseitig ist ein Verschlußkörper 16 in den Hohlraum 14 eingesetzt und mit dem Ventilschließkörper 5 beispielsweise mittels einer Schweißnaht 17 verbunden.

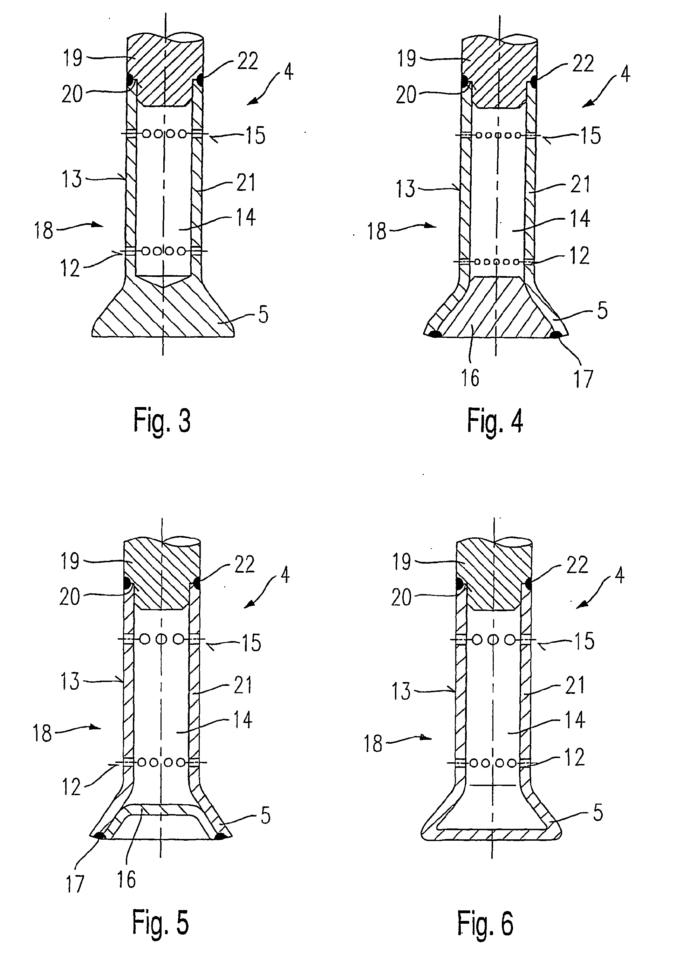

Fig. 3 zeigt im gleichen Ausschnitt wie Fig. 1B ein drittes Ausführungsbeispiel einer erfindungsgemäß ausgestalteten Ventilnadel 4.

Hierbei ist, wie auch in den in Fig. 4 bis 6 dargestellten Ausführungsbeispielen, die Ventilnadel 4 mehrteilig ausgebildet. Ein Schaft 19 der Ventilnadel 4 weist eine Schulter 20 auf, auf welche ein Rohr 21 aufgesetzt ist, welches an seinem abströmseitigen Ende den Ventilschließträger 5 trägt. Das Rohr 21 kann mit dem Schaft 19 beispielsweise mittels einer Schweißnaht 22 verbunden sein. Das gezeigte Ausführungsbeispiel kann beispielsweise mittels Drehen und anschließendes Ausbohren hergestellt werden.

Fig. 4 zeigt im gleichen Ausschnitt wie Fig. 1B ein viertes Ausführungsbeispiel einer erfindungsgemäß ausgestalteten Ventilnadel 4. Wie auch in den in Fig. 5 und 6 dargestellten Ausführungsbeispielen kann das Rohr 21 aus einem gut formbaren Material, wie z. B. einem austenitischen Blech hergestellt sein, welches in Kombination mit einem Düsenkörper 3 aus Martensit eine Temperaturkompensation erlaubt.

Das Rohr 21 ist in diesem Ausführungsbeispiel durch einen gedrehten Verschlußkörper 16 stirnseitig abgeschlossen und mit jeweils einer umlaufenden Reihe von Zuströmöffnungen 15 und Zumeßbohrungen 12 versehen. Der Verschlußkörper 16 ist mittels einer Schweißnaht 17 mit dem Rohr 21 verbunden.

Fig. 5 zeigt im gleichen Ausschnitt wie Fig. 1B ein fünftes Ausführungsbeispiel einer erfindungsgemäß ausgestalteten Ventilnadel 4. Das Rohr 21 ist ähnlich geformt wie in dem in Fig. 4 dargestellten Ausführungsbeispiel, jedoch ist der Verschlußkörper 16 als Tiefziehteil ausgebildet. Als Verbindung ist ebenfalls eine Schweißnaht 17 vorgesehen.

Fig. 6 zeigt im gleichen Ausschnitt wie Fig. 1B ein sechstes Ausführungsbeispiel einer erfindungsgemäß ausgestalteten Ventilnadel 4. Hierbei ist das Rohr 21 einstückig mit dem Verschlußkörper 16 ähnlich wie die Ventilnadel 4 in dem in Fig. 1A und 1B dargestellten ersten Ausführungsbeispiel durch Hydro-Umformung oder ein ähnliches Herstellungsverfahren gefertigt.

Die Erfindung ist nicht auf die dargestellten Ausführungsbeispiele beschränkt und für beliebige Bauweisen von Brennstoffeinspritzventilen 1 mit beliebigen Aktoren 7 anwendbar.

## Patentansprüche

1. Brennstoffeinspritzventil (1) zum direkten Einspritzen von Brennstoff in den Brennraum einer Brennkraftmaschine mit einer in einem Düsenkörper (3) angeordneten Ventilnadel (4), welche durch einen Aktor (7) betätigbar ist und durch eine Rückstellfeder (9) so beaufschlagt ist, daß ein mit der Ventilnadel (4) in Wirkverbindung stehender, dem Brennraum zugewandter Ventilschließkörper (5) im unbetätigten Zustand des Aktors (7) in dichtender Anlage an einer Ventilsitzfläche (6) gehalten wird,
wobei die Ventilnadel (4) zumindest in einem abströmseitigen Teilbereich hohl ausgebildet und stirnseitig gegen den Brennraum abgeschlossen ist,
**dadurch gekennzeichnet,**
**daß** die Ventilnadel (4) abströmseitig des Führungsbereichs (18) Zumeßbohrungen (12, 15) aufweist und
**daß** die Anzahl und Anordnung der Zumeßbohrungen (12, 15) durch die Strahlform des von dem Brennstoffeinspritzventil (1) abgespritzten Brennstoffstrahl vorgegeben ist.

2. Brennstoffeinspritzventil nach Anspruch 1,
**dadurch gekennzeichnet,**
**daß** die Ventilnadel (4) einen Führungsbereich (18) aufweist, in welchem die Ventilnadel (4) geführt ist.

3. Brennstoffeinspritzventil nach Anspruch 1 oder 2,
**dadurch gekennzeichnet,**
**daß** die erste Zuströmöffnungen (15) einen Gesamtquerschnitt aufweisen, der größer als ein Gesamtquerschnitt zweiter Zumeßbohrungen (12) ist.

4. Brennstoffeinspritzventil nach einem der Ansprüche 1 bis 3,
**dadurch gekennzeichnet,**
**daß** die Ventilnadel (4) einstückig mittels Hydro-Umformung hergestellt ist.

5. Brennstoffeinspritzventil nach einem der Ansprüche 1 bis 4,
**dadurch gekennzeichnet,**
**daß** die Ventilnadel (4) in ihrem abströmseitigen Ende mittels Bohrens ausgehöhlt ist.

6. Brennstoffeinspritzventil nach Anspruch 5,
**dadurch gekennzeichnet,**
**daß** die Ventilnadel (4) zweiteilig ausgebildet ist.

7. Brennstoffeinspritzventil nach Anspruch 6,
**dadurch gekennzeichnet,**
**daß** die Ventilnadel (4) einen Schaft (19) und ein, Rohr (21) umfaßt.

8. Brennstoffeinspritzventil nach Anspruch 7,
**dadurch gekennzeichnet,**
**daß** das Rohr (21) sich an einer Schulter (20) des Schaftes (19) abstützt.

9. Brennstoffeinspritzventil nach Anspruch 8,
**dadurch gekennzeichnet,**
**daß** das Rohr (21) mit dem Schaft (19) mittels einer Schweißnaht (22) verbunden ist.

10. Brennstoffeinspritzventil nach einem der Ansprüche 8 oder 9,
**dadurch gekennzeichnet,**
**daß** das Rohr (21) stirnseitig mit einem Verschlußkörper (16) abgeschlossen ist.

11. Brennstoffeinspritzventil nach Anspruch 10,
**dadurch gekennzeichnet,**
**daß** das Rohr (21) mit dem Verschlußkörper (16) einstückig ausgebildet ist.

12. Brennstoffeinspritzventil nach Anspruch 10,
**dadurch gekennzeichnet,**
**daß** der Verschlußkörper (16) und das Rohr (21) mittels einer Schweißnaht (17) verbunden sind.

13. Brennstoffeinspritzventil nach Anspruch 10,
**dadurch gekennzeichnet,**
**daß** der Verschlußkörper (16) mittels Drehen hergestellt ist.

14. Brennstoffeinspritzventil nach Anspruch 10,
**dadurch gekennzeichnet,**
**daß** der Verschlußkörper (16) mittels Tiefziehen hergestellt ist.

## Claims

1. Fuel injection valve (1) for the direct injection of fuel into the combustion chamber of an internal combustion engine, having a valve needle (4) which is arranged in a nozzle body (3), can be actuated by an actuator (7) and is loaded by a restoring spring (9) in such a way that a valve closing body (5) which is operatively connected to the valve needle (4) and faces the combustion chamber is held in sealing contact against a valve seat face (6) in the non-actuated state of the actuator (7), the valve needle (4) being of hollow configuration at least in an outflow-side part region and being closed on the end side towards the combustion chamber, **characterized in that** the valve needle (4) has metering holes (12, 15) on the outflow side of the guide region (18), and **in that** the number and arrangement of the metering holes (12, 15) is defined by the jet shape of the fuel jet which is ejected from the fuel injection valve (1).

2. Fuel injection valve according to Claim 1, **characterized in that** the valve needle (4) has a guide region (18), in which the valve needle (4) is guided.

3. Fuel injection valve according to Claim 1 or 2, **characterized in that** the first inflow openings (15) have an overall cross section which is greater than an overall cross section of second metering holes (12).

4. Fuel injection valve according to one of Claims 1 to 3, **characterized in that** the valve needle (4) is manufactured in one piece by means of hydroforming.

5. Fuel injection valve according to one of Claims 1 to 4, **characterized in that** the valve needle (4) is hollowed out in its outflow-side end by means of drilling.

6. Fuel injection valve according to Claim 5, **characterized in that** the valve needle (4) is of two-part configuration.

7. Fuel injection valve according to Claim 6, **characterized in that** the valve needle (4) comprises a stem (19) and a pipe (21) .

8. Fuel injection valve according to Claim 7, **characterized in that** the pipe (21) is supported on a shoulder (20) of the stem (19).

9. Fuel injection valve according to Claim 8, **characterized in that** the pipe (21) is connected to the stem (19) by means of a welded seam (22).

10. Fuel injection valve according to either of Claims 8 and 9, **characterized in that** the pipe (21) is closed on the end side by a closure body (16).

11. Fuel injection valve according to Claim 10, **characterized in that** the pipe (21) is configured in one piece with the closure body (16).

12. Fuel injection valve according to Claim 10, **characterized in that** the closure body (16) and the pipe (21) are connected by means of a welded seam (17).

13. Fuel injection valve according to Claim 10, **characterized in that** the closure body (16) is manufactured by means of turning.

14. Fuel injection valve according to Claim 10, **characterized in that** the closure body (16) is manufactured by means of deep-drawing.

## Revendications

1. Injecteur de carburant (1) pour injection directe de carburant dans la chambre de combustion d'un moteur à combustion interne, qui comprend une aiguille d'injecteur (4) qui, montée dans un corps d'injecteur (3) peut être manoeuvrée par un actionneur (7) et est contrainte par un ressort de rappel (9) pour maintenir un obturateur d'injecteur (5) relié à l'aiguille d'injecteur (4) et tourné vers la chambre de combustion, en appui étanche sur une portée de siège d'injecteur (6) quand l'actionneur (7) est inactif, l'aiguille d'injecteur étant creuse dans une zone aval par rapport à l'écoulement et fermée frontalement du côté de la chambre de combustion,
**caractérisé en ce que**
l'aiguille d'injecteur (4), vers l'aval de la zone de guidage (18), présente des alésages de dosage (12, 15) dont le nombre et la disposition sont prédéfinis par la forme du jet de carburant projeté par l'injecteur (1).

2. Injecteur de carburant selon la revendication 1,
**caractérisé en ce que**
l'aiguille d'injecteur (4) présente une zone de guidage (18) dans laquelle se déplace l'aiguille d'injecteur (4).

3. Injecteur de carburant selon la revendication 1 ou 2,
**caractérisé en ce que**
des premiers alésages de dosage (15) présentent une section globale supérieure à la section globale de seconds alésages de dosage (12).

4. Injecteur de carburant selon une des revendications 1 à 3,
**caractérisé en ce que**
l'aiguille d'injecteur (4) est fabriquée monobloc par hydroformage.

5. Injecteur de carburant selon une des revendications 1 à 4,
**caractérisé en ce que**
l'aiguille d'injecteur (4) est creusée par alésage à son extrémité aval.

6. Injecteur de carburant selon la revendication 5,
**caractérisé en ce que**
l'aiguille d'injecteur (4) est en deux parties.

7. Injecteur de carburant selon la revendication 6,
**caractérisé en ce que**
l'aiguille d'injecteur (4) comprend une tige (19) et un tube (21).

8. Injecteur de carburant selon la revendication 7,
**caractérisé en ce que**
le tube (21) est en appui sur un épaulement (20) de la tige (19).

9. Injecteur de carburant selon la revendication 8,
**caractérisé en ce que**
le tube (21) est relié à la tige (19) par un cordon de soudure (22).

10. Injecteur de carburant selon la revendication 8 ou 9,
**caractérisé en ce que**
le tube (21) est obturé frontalement par un corps de fermeture (16).

11. Injecteur de carburant selon la revendication 10,
**caractérisé en ce que**
le tube (21) est monobloc avec le corps de fermeture (16).

12. Injecteur de carburant selon la revendication 10,
**caractérisé en ce que**
le corps de fermeture (16) et le tube (21) sont reliés par un cordon de soudure (17).

13. Injecteur de carburant selon la revendication 10,
**caractérisé en ce que**
le corps de fermeture (16) est fabriqué par tournage.

14. Injecteur de carburant selon la revendication 10,
**caractérisé en ce que**
le corps de fermeture (16) est fabriqué par étirage profond.
